# EUROPÄISCHE PATENTSCHRIFT

(11) **EP 1 240 564 B1**
(45) Veröffentlichungstag und Bekanntmachung des Hinweises auf die Patenterteilung: **03.09.2003**
(21) Anmeldenummer: 00990591.0
(22) Anmeldetag: 13.12.2000
(51) Int. Cl.: G05D 23/00

(54) **ELEKTRONISCHER MISCHWASSERBEREITER UND VERFAHREN ZUR MISCHWASSERBEREITUNG**
ELECTRONIC MIXED WATER PREPARATION DEVICE AND METHOD FOR PREPARING MIXED WATER
DISPOSITIF ELECTRONIQUE DE PREPARATION D'EAU MIXTE ET PROCEDE DE PREPARATION D'EAU MIXTE

(30) Priorität: 18.12.1999 DE 19961183
(43) Veröffentlichungstag der Anmeldung: 18.09.2002
(60) Teilanmeldung: 02027886.7
(73) Patentinhaber: Innotech Electronic GmbH, 76646 Bruchsal (DE)
(72) Erfinder: WACK, Volker, 76646 Bruchsal (DE); PETZOLD, Heiko, 68794 Rheinhausen (DE)
(74) Vertreter: Truckenmüller, Frank
(86) Internationale Anmeldenummer: DE0004680
(87) Internationale Veröffentlichungsnummer: WO01044884

(56) Entgegenhaltungen:
- DE-A- 4 026 110
- DE-A- 4 401 637
- GB-A- 2 056 627
- US-A- 4 646 964
- US-A- 5 588 636

## Beschreibung

Die Erfindung betrifft einen elektronischen Mischwasserbereiter mit einer Bedieneinheit zur Sollwertvorgabe und einer elektronischen Regeleinheit, die in Abhängigkeit von einem Temperatursensor zur Ist-Wert-Erfassung über ein mechanisches Stellglied auf eine Regelstrecke zur Mischwasserbereitung einwirkt.

Eine derartig elektronische Mischwasseraufbereitung ist aus der DE 40 26 110 vorbekannt. Es handelt sich dabei um eine Mischwasserbereitungsanlage mit Kalt- und Warmwasser-Zuflüssen, sowie ein Mischwasserabfluß und einem vor der Mischkammer angeordneten Regelventil, dem eine elektronische Regeleinrichtung sowie eine digital arbeitende Steuerund Recheneinheit zugeordnet ist. Die Steuer- und Recheneinheit arbeitet mit einem Programmspeicher zusammen. Die Mischwasseraufbereitung kann entweder anhand der über eine Bedieneinheit eingegebenen Vorgaben oder aufgrund der Vorgaben eines im Programmspeicher abgelegten Steuerprogramms erfolgen.

Dieser Entwicklung liegt insbesondere die Aufgabe zugrunde, bereits bestehende Mischwasserbatterien mit einer elektronischen Regelung nachzurüsten. Nachteil dieses Nachrüstbausatzes ist, daß es sich um ein zusätzliches externes Gerät handelt, das insbesondere im Bereich privater Anwendungen platzbedingt nur selten einsetzbar ist, da die Platzverhaltnisse im Baderbereich beengt sind und überdies eine derart hochwertige Mischwasseraufbereitung mit optischen Beeinträchtigungen durch ein nur auf Putz zu montierendes Zusatzgerät verbunden sind, das üblicherweise als optisch wenig ansprechend empfunden wird. Die "Auf-Putz-Montage" des Zusatzgerätes ist auch deshalb zwingend, weil es Sinn und Zweck der vorbekannten Vorrichtung ist, den dem Regelventil zugeordneten Programmspeicher bedarfsweise auswechseln zu können. Hierzu muß das Gerät zwangsläufig frei zugänglich montiert sein.

Eine vergleichbare elektronische Mischwasseraufbereitung ist auch aus der GB-A-2 056 627 bekannt geworden. Dabei wirkt ein Motor über einen Getriebemechanismus auf eine in Richtung ihrer Längsachse transversal verschiebliche Kolbenstange, die an ihrem freien Ende ein hohlzylindrisches Ventilelement zum wahlweise Verschließen eines Warmund Kaltwasserzulaufs aufweist. Zur Betätigung des Ventils kann das Ventilelement über die durch den Motor transversal hin- und her bewegliche Kolbenstange entsprechend bewegt werden. Diese Ventilkonstruktion ist aufwendig. Der für eine bestimmte Druchflußmenge benötigte Bauraum ist vergleichsweise groß. Mit derartigen Proportionalventilen lassen sich nur begrenzte Reaktions- beziehungsweise Schaltzeiten erreichen. Die Abdichtung der Kolbenstange gegenüber dem Ventilgehäuse ist aufwendig und bedingt durch den vergleichsweise großen Transversalhub tritt ein erhöhter Verschleiß auf.

Der Erfindung liegt daher die Aufgabe zugrunde, eine Vorrichtung zur elektronischen Mischwasseraufbereitung zu schaffen, welche die im Stand der Technik bestehenden Nachteile vermeidet und rur den neim- und Haushaltsbereich geeignet ist.

Die der Erfindung zugrundeliegende Aufgabe wird durch eine Vorrichtung gemäß Anspruch 1 gelöst.

Dadurch, daß gemäß dem Hauptanspruch sowohl die elektronische Reglereinheit als auch das mechanische Stellglied in einer einzigen kompakten Geräteeinheit angeordnet sind, kann die gesamte elektronische Mischwasserbereitungsanlage unter Putz montiert werden. Darüber hinaus erlaubt es die kompakte geschlossene Bauform, auf lange und störanfällige Verkabelungen zu verzichten. Überdies ist die elektronische Reglereinheit auf das mechanische Stellglied optimal abgestimmt.

Ein weiterer überraschender Vorteil kann dadurch erzielt werden, daß die komplette Regelung zur Mischwasseraufbereitung ausschließlich mit einem einzigen Temperatursensor erfolgt. Der Verzicht auf eine aufwendige und vielfältige Sensorik beseitigt Fehlerquellen und reduziert überdies den ansonsten erforderlichen Kostenaufwand. Die verringerte Sensorik kann durch eine entsprechend geschickte Aufbereitung der Meßwerte kompensiert werden.

Dadurch, daß das Stellglied auf einen drehbar gelagerten Stellkörper einwirkt, so daß ein seiner Drehstellung entsprechendes Wassergemisch des durch einen Warmwasserzulauf und einen Kaltwasserzulauf zuführbaren Warm- und Kaltwassers innerhalb des Mischerkörpers erzeugbar ist, läßt sich ein elektronischer Mischwasserbereiter schaffen, der sich durch einen minimalen Bauraum besonders für die Unterputzmontage eignet, wobei besonders schnelle Reaktions- beziehungsweise schaltzeiten sowie günstige Abdicht- und Verschleißverhältnisse erzielbar sind.

In vorteilhafter Ausgestaltung ist als Stellglied der Regelstrecke ein Schrittmotor vorgesehen, der über ein Getriebe auf ein Zwei-Wege-Mischerventil einwirkt. Diese Anordnung hat den Vorteil, daß die vorgegebene Regelgröße mittels des beschriebenen Stellgliedes unmittelbar und eindeutig umgesetzt wird. Dies stellt eine deutliche Verbesserung gegenüber den ansonsten üblichen Dehnstoffelementen oder Bimetallscheiben zur Mischwasserregelung dar. Die zuletzt genannten Stellglieder arbeiten temperaturabhängig, so daß das Verhalten des Reglers sich je nach eingestellter Temperatur ändern kann.

Eine hochgenaue Temperaturregelung würde daher immer eine entsprechende Überwachung des Stellgliedes erfordern. Dies ist allerdings aufgrund des stark material- und temperaturabhängigen Verhaltens der genannten Stellglieder nur mit erheblichem Aufwand möglich.

Der elektronische Mischwasserbereiter ist vorteilhafterweise mit einem Schnittstellenmodul zum Anschluß von Diagnoseund/oder Programmiergeräten verbunden. Das Schnittstellenmodul kann entweder zur Fehlerdiagnose, Paramatrierung oder zur Einspeicherung von notwendigen Steuerungsprogrammen genutzt werden. Das Schnittstellenmodul kann ferner eine Fernsteuerung der elektronischen Mischwasserbereitung ermöglichen. Die Fernsteuerung kann dabei mittels leitender Verbindung oder mit einer Infrarot- oder Funkansteuerung erfolgen. Über das Schnittstellenmodul kann auch ein Support der unter Putz montierten Anlage erfolgen.

Der Tatsache, daß die elektronische Mischwasserbereitung eine ganze Reihe von zusätzlichen Möglichkeiten und einen erhöhten Bedienkomfort bietet, kann dadurch Rechnung getragen werden, daß als Bedieneinheit eine Anzeige vorgesehen ist, die neben einer Eingabeeinheit mit einem Display versehen ist.

Dabei handelt es sich in einfachster Ausführung um eine dreistellige Anzeige, wobei vorzugsweise jedes alphanumerische Zeichen als Sieben-Segment-Anzeige ausgebildet ist. Diese Anzeige wird im wesentlichen zur Anzeige der Sollund/Oder Ist-Temperatur genutzt.

Die Bedieneinheit weist ferner in einfachster Ausführung eine Menütaste sowie zwei Auswahltasten auf.

Die Leistungsfähigkeit des elektronischen Mischwasserbereiters läßt es ohne weiteres zu, einer einzigen derartigen Vorrichtungen eine Vielzahl von Wasserausläufen mit dementsprechend aufbereitetem Mischwasser zu versorgen. Hier kann die CPU des Mischwasserbereiters zur gezielten Ansteuerung ausgewählter Mischwasserausläufe genutzt werden.

Die Erfindung wird nachstehend anhand eines in der Zeichnung nur schematisch dargestellten Ausführungsbeispiels näher erläutert. Es zeigen:
- Fig. 1: Eine Prinzipdarstellung eines elektronischen Mischwassserbereiters im Blockschaltbild;
- Fig. 2: eine Geräteeinheit zur Mischwasserbereitung im Querschnitt;
- Fig. 3: eine Bedieneinheit des Mischwasserbereiters;
- Fig. 4: ein Blockschaltbild der Reglereinheit mit Ein- und Ausgängen und
- Fig. 5: ein Flußdiagramm zur Temperaturregelung.

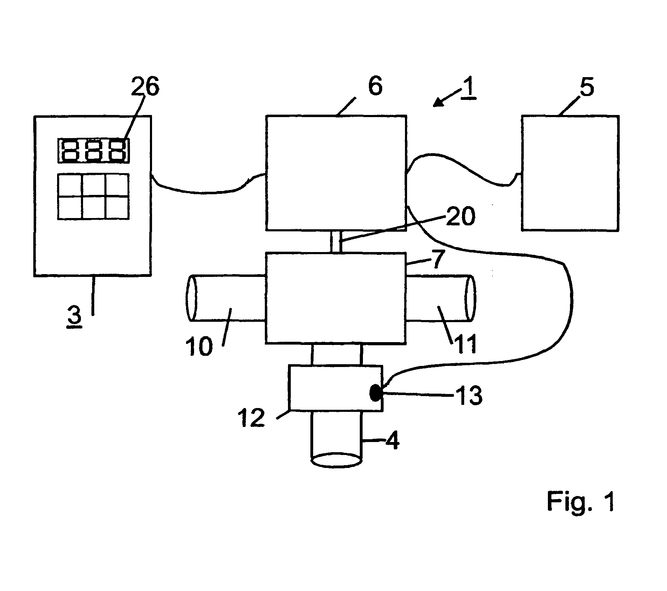

Fig. 1 zeigt einen elektronischen Mischwasserbereiter 1. Der Mischwasserbereiter 1 besteht im wesentlichen aus einer kompakten Geräteeinheit 2, die vollständig unter Putz montiert werden kann. Die Geräteeinheit 2 steht mit einer Bedieneinheit 3 bzw. einer Armatur in Datenverbindung. Die Einheit 3 steht zumeist in einem funktionalen Zusammenhang mit einem Wasserauslaß, der über den Auslauf 4 der Geräteeinheit 2 bedient wird. Die Geräteeinheit 2 ist ferner mit einem Schnittstellenmodul 5 verbunden. Das Schnittstellenmodul 5 kann entweder räumlich entfernt von der Geräteeinheit 2 oder integriert in die Geräteeinheit 2 sein. Hierbei ist das Schnittstellenmodul 5 in jedem Fall so montiert, daß an die Schnittstelle von außen Diagnose- und/oder Programmiergeräte anschließbar sind. Beispielsweise kann eine RS 485-Schnittstelle auf Putz montiert sein, die mit Geräteeinheit 2 in Datenverbindung steht. Die Geräteeinheit 2 besteht im wesentlichen aus einer elektronischen Reglereinheit 6 die neben dem eigentlichen elektronischen Regler einen Schrittmotor enthält, der über ein Getriebe 20 mit der eigentlichen Mischereinheit 7 und dem in der Mischereinheit 7 angeordneten Regelventil verbunden ist. Die Mischereinheit 7 arbeitet rein mechanisch und besteht im wesentlichen aus einem Mischerkörper 8 der einen Warm- und einen Kaltwasserzulauf 10 und 11 aufweist. Das zugeführte Warm- und Kaltwasser wird innerhalb des Mischerkörpers 8 in dem von der elektronischen Reglereinhelt 6 vorgegebenen Verhältnis gemischt und somit die Bedieneinheit 3 vorgegebene Solltemperatur idealerweise erreicht.

Im Bereich des Wasserauslaufs 4 greift üblicherweise die hier nicht weiter zu erörternde Durchflußsteuerung 12 ein. Im Bereich der Durchflußsteuerung 12 ist überdies ein Temperatursensor 13 zur Ist-Temperatur-Erfassung angeordnet, der den jeweiligen Ist-Wert an die Reglereinheit 6 rückmeldet.

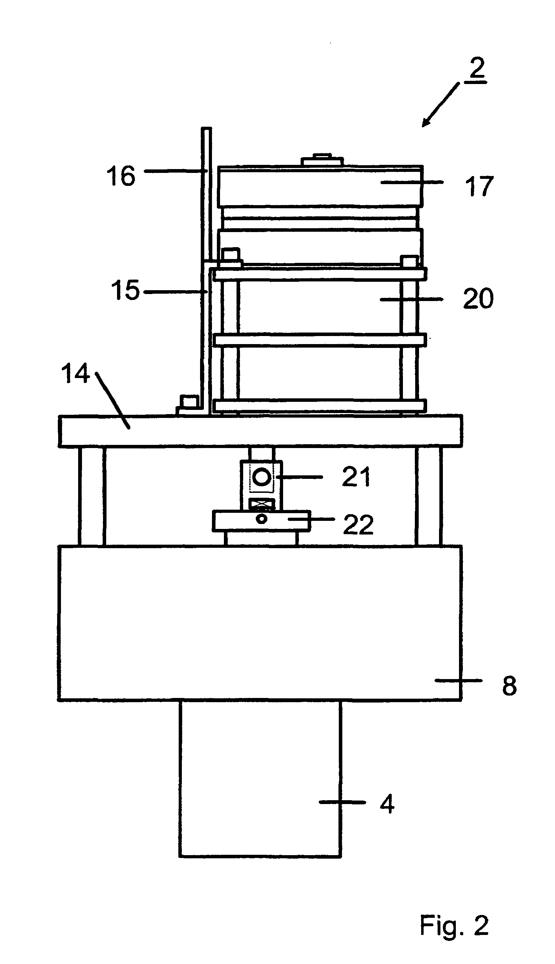

Der genaue Aufbau der kompakten Geräteeinheit 2 ist in Fig. 2 näher dargestellt. Innerhalb dieser Geräteeinheit 2 ist eine Grundplatte 14 mit einem Winkelblech 15 verschraubt. Das Winkelblech 15 trägt überdies ein Halteblech 16 mit einer Platine, die im wesentlichen mit den Komponenten zum Aufbau der elektronischen Reglereinheit 6 bestückt ist. Die elektronische Reglereinheit 6 wirkt auf einen als Stellglied eingesetzten Schrittmotor 17, der über das Getriebe 20 auf einen drehbar gelagerten Stellkörper 21 einwirkt. Entsprechend der jeweiligen Drehstellung des Stellkörpers 21 wird der Warm- oder Kaltwasserzulauf 10 oder 11 mehr oder minder weit geöffnet und ein der jeweiligen Stellung des Stellkörpers 21 entsprechendes Wassergemisch innerhalb des Mischerkörpers 8 erzeugt, das über den Auslauf 4 ausströmt. Der Stellkörper 21 ist gegenüber dem Mischerkörper 8 mittels einer Stopfbuchsmutter 22 abgedichtet.

Die vorstehend erläuterte Geräteeinheit 2 kann bei gleicher Funktionalität selbstverständlich auch in anderer geometrischer Anordnung aufgebaut sein. Wesentlich ist lediglich, daß eine Reglereinheit 6 auf einen Schrittmotor 17 einwirkt und dieser über ein Getriebe 20 einen Stellkörper 21 definiert verstellt. Im unterschied zu sonst üblichen Beim- stoffelementen oder Bimetalllösungen stellt die jeweilige Stellung des Getriebes 20 eine eindeutig definierte und erfaßbare Größe der augenblicklichen Stellgliedstellung und somit des eingestellten Warm-Kalt-Wasser-Gemischs dar.

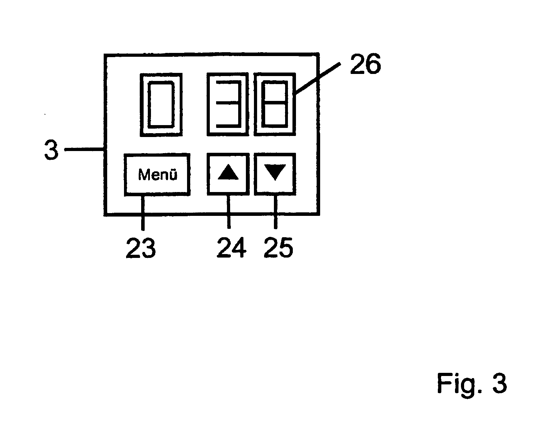

Die über die Reglereinheit 6 auf das Stellglied 21 zu vermittelnden Soll-Wert-Vorgaben werden mittels der Bedieneinheit 3 eingegeben, die in Fig. 3 detaillierter dargestellt ist.

In besonders einfacher und vorteilhafter Ausführung besteht die Bedieneinheit 3 aus einer Menütaste 23 und zwei Auswahl-Tasten 24 und 25 sowie einer dreistelligen alphanumerischen Anzeige 26, wobei im vorliegenden Falle eine Drei-Ziffern-Anzeige dargestellt ist, wobei jedes einzelne alphanumerische Zeichen als herkömmliche Sieben-Segment-Anzeige realisiert ist.

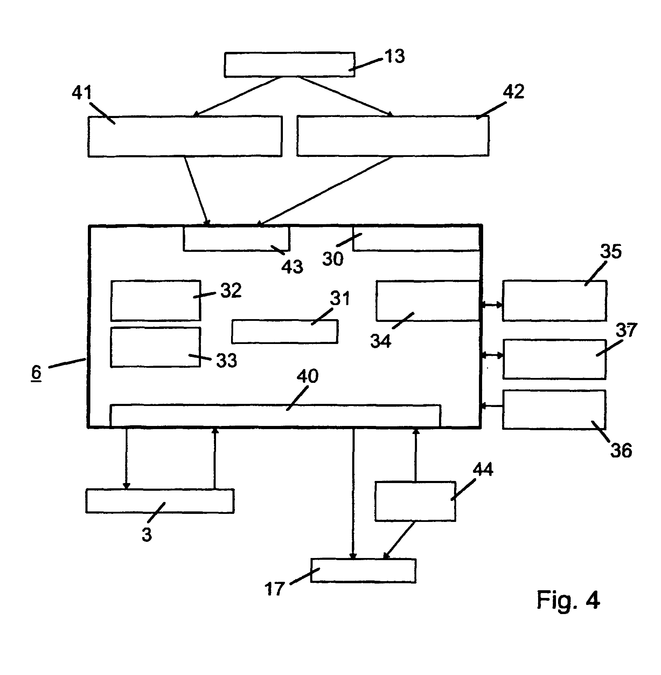

Die in der kompakten Geräteeinheit 2 angeordnete Reglereinheit 6 ist in Fig. 4 näher dargestellt. Die Reglereinheit 6 umfaßt neben einem Mikrocontroller 30 mit einer integrierten Rechnereinheit 31 und einem integrierten Programmspeicher 32 auch einen Datenspeicher 33. Darüber hinaus ist die Reglereinheit 6 mit einer seriellen Schnittstelle 34 zum Anschluß des Schnittstellenmoduls 5 versehen. Der seriellen Schnittstelle 34 ist ein Schnittstellentreiber 35 zugeordnet. Die Reglereinheit 6 steht überdies mit einem Reset-Controller 36 sowie einem Betriebsdatenspeicher 37 in Datenverbindung. Schließlich weist die Reglereinheit 6 diverse digitale Ein- und Ausgänge 40 zum Anschluß der Bedieneinheit 3 sowie des Schrittmotors 17 auf. Der Temperatursensor 13 ist über unterschiedliche Meßverstärker 41 und 42 und einen im Mikrocontroller 30 integrierten Analog / Digitalwandler 40 mit der Reglereinheit 6 verbunden.

Die unterschiedlichen Meßverstärker 41 und 42 sind notwendig, um unterschiedliche Regelgenauigkeiten unterscheidbarer Temperaturbereiche zu realisieren. So kann ein außerhalb der üblichen Bezugstemperatur liegender Temperaturbereich definiert sein, der nur mit einer Grobregelung versehen ist. Dieser üblicherweise größere Temperaturbereich kann mit einem Meßverstärker geringerer Auflösung versehen sein, da die Meßwerte als solche größere Unterschiede aufweisen, als in dem Temperaturbereich, der mit einer feineren Regelung versehen ist.

Über die serielle Schnittstelle 34 können sowohl der Programm- als auch der Datenspeicher parametriert werden. Hierbei erfolgt die anfängliche Parametrierung der Anlage anhand eines herstellerseitig im Programmspeicher 32 des Mikrocontrollers30 abgelegten Programms. Gemäß diesem Programm wird vor der ersten Inbetriebnahme der gesamte Regelbereich abgefahren, bis das durch einen von zwei entsprechenden Endschalter 44 markierte eine Ende des mechanischen Stellbereichs des Stellkörpers 21 erreicht ist. Die diesem einen Endpunkt entsprechende Stellung wird im Datenspeicher 33 gesichert. Bei dem angefahrenen Endpunkt des Regelbereichs wird es sich meist um den Bezug von "nur" Kaltwasser handeln.

Zusätzlich wird im laufenden Betrieb der Anlage jede zur Umsetzung einer Temperaturvorgabe angefahrene Position des Stellglieds bzw. die dieser Stellung entsprechende Sollwertvorgabe in Form eines sich ständig ändernden und verfeinernden Histogramms im Datenspeicher 33 abgelegt.

Der Mischwasserbereiter 1 stellt somit ein selbstlernendes und selbstanpassendes System dar.

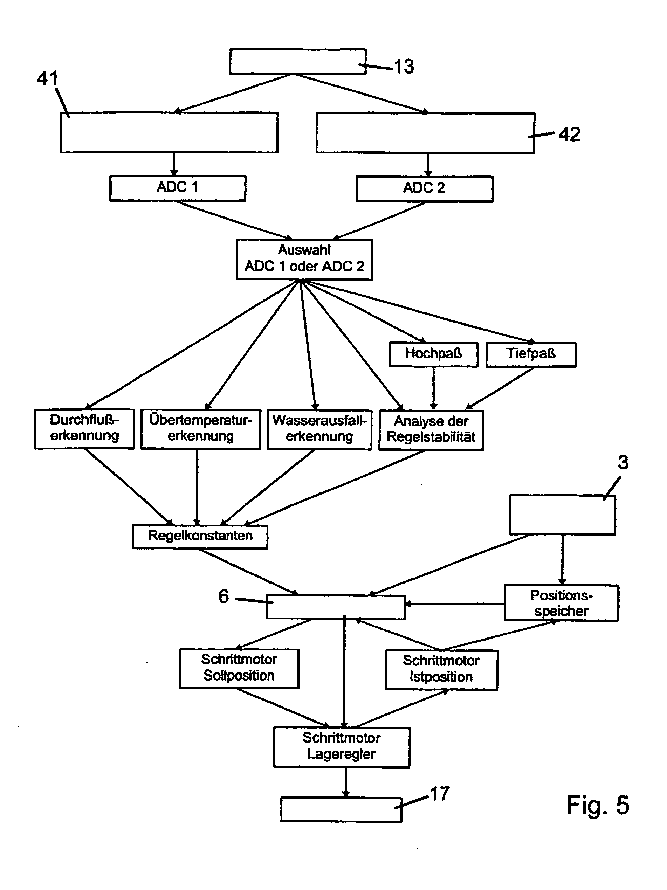

Eine übliche Temperaturregelung ist in einem Flußdiagramm gemäß Fig. 5 dargestellt. Hierbei wirkt der Regler 6 über den Schrittmotor 17 auf das Regelventil ein. Ein erster unterlagerter Regelkreis besteht daher in der Regelung der Ist-/Soll-Position des Schrittmotors 17. Auf diesen Regelkreis wirkt zunächst die Solltemperaturvorgabe der Bedieneinheit 3 ein. Dieser überlagerte Regelkreis zur Temperaturregelung erhält eine Ist-Wert-Rückmeldung über den Temperatursensor 13 der wie gesagt je nach festgestelltem Temperaturbereich über den ersten Meßverstärker 41 oder den zweiten Meßverstärker 42 einwirkt. Je nach Wert wird zur Wahrung der Reglerstabilität der verzögerte Meßwert über einen Hoch- oder Tiefpaß als Ist-Wert auf die Reglereinheit 6 gegeben, wobei eine begleitende Auswertung der vom Temperatursensor 13 übermittelten Werte zur Durchflu-ßerkennung, Übertemperaturerkennung oder Erkennung eines Wasserausfalls genutzt werden. Für den Fall, daß die Gradientenauswertung eines der genannten Ereignisse feststellt, wird dem Regler eine konstante Sollgröße vorgegeben, die den Schrittmotor 17 sofort in eine den Wasserbezug beendende Stellung verfährt.

Somit ist vorstehend ein Verfahren und eine Vorrichtung zur elektronischen Mischwasserbereitung beschrieben, das mittels einer kompakten Geräteeinheit 2 eine Mischwasseraufbereitung in Verbindung mit einem bisher nicht erreichten Bedienkomfort ermöglicht. Aufgrund einer optimalen Abstimmung zwischen der elektronischen Regelung und der mechanischen Stellglieder wird eine hohe Regelgeschwindigkeit bei gleichzeitig extrem geringem sensorischem Aufwand erreicht. Im wesentlichen kann die gesamte Mischwasseraufbereitung allein mittels eines einzigen Temperatursensors 13 erfolgen.

Folglich betrifft die Erfindung auch ein Verfahren zur Mischwasseraufbereitung, bei dem ein über eine Bedieneinheit 3 eingebbarer vorgebbarer Sollwert über eine elektronische Regeleinheit 6 in Abhängigkeit von einem mittels eines Temperatursensors 13 erfaßten Ist-Wert mittels eines mechanischen Stellgliedes 17 auf eine Regelstrecke zur Mischwasserbereitung einwirkt.

Dabei kann erfindungsgemäß vorgesehen sein, dass eine über die Bedieneinheit 3 vorgebbare Soll-Temperatur des Bezugswassers bzw. dass das Bezugswasser, dessen Soll-Temperatur über die Bedieneinheit 3 vorgebbar ist, ausschließlich mittels des Temperatursensors 13 zur Ist-Wert-Erfassung abgemischt wird und zusätzlich eine Gradientenauswertung des mittels des Temperatursensors 13 erfaßten Temperaturverlaufs zur Durchflußerfassung vorgenommen wird. Mit anderen Worten kann die gesamte Mischwasseraufbereitung mittels eines Temperatursensors 13 als einzigem Sensor dadurch erfolgen, daß neben der bloßen Ist-Wert-Erfassung der Temperatur eine Gradientenauswertung des festgestellten Temperaturverlaufs durchgeführt wird. Der Verlauf des Temperaturgradienten erlaubt es, festzustellen, ob ein Wasserdurchfluß stattfindet.

Das erfindungsgemäße Verfahren gestattet somit eine Durchflußerkennung ohne einen entsprechenden Durchflußsensor.

In vorteilhafter Ausgestaltung des Verfahrens wird die Nachführung des Stellgliedes 17 abgeschaltet, sobald und solange der Gradient des Temperaturverlaufs einen vorgebbaren Schwellwert unterschreitet bzw. unterhalb einen vorgebbaren Schwellwert sinkt. Dies bedeutet in konkreter Ausgestaltung, daß eine Temperaturregelung nur dann erfolgt, wenn tatsächlich auch ein Wasserdurchfluß erfolgt.

Durch die Abschaltung des Stellgliedes 17, vorzugsweise eines Schrittmotors, wird ein unnötiger Stromverbrauch sowie ein vorzeitiger Verschleiß der unter Putz montierten Teile vermieden. Ansonsten würden die mechanisch beweglichen Teile des Regelventils auch ohne Wasserdurchlauf ständig bewegt werden.

Schließlich kann bei dem erfindungsgemäßen Verfahren zwischen wenigstens zwei Temperaturregelbereichen unterschiedlicher Regelgenauigkeit unterschieden werden. Hierdurch ist es möglich, daß innerhalb des üblichen Nutzbereichs eine Feinregelung vorgesehen wird. Dieser Bereich kann beispielsweise mit einer Regelgenauigkeit von einem Zehntel oder einem halben Grad ausgestattet sein. Außerhalb des üblichen Nutzungsbereiches ist eine derartige Regelgenauigkeit nicht erforderlich. Dieser Bereich muß lediglich erfaßt werden können, da die äußeren Umgebungsbedingungen, insbesondere die Umgebungstemperatur, feststellbar sein müssen. Um von diesem Grobregelbereich in den Feinregelbereich zu verfahren, muß allerdings nicht mit letzter Genauigkeit gearbeitet werden. Auch diese Unterscheidung zwischen einer Grob- und einer Feinregelung stellt eine Maßnahme zur Erhöhung der Lebensdauer der Anlage dar, da auch hierdurch unnötige Stellgliedbewegungen vermieden werden.

Dieses Merkmal kann dadurch weiter ausgestaltet werden, daß die Nachführung des Stellgliedes 17 außerhalb bzw. auch außerhalb eines definierten Temperaturbereiches abgeschaltet bzw. unterbunden wird. Auch dies stellt eine Maßnahme dar, um unnötigen Verschleiß- und Energieverbrauch zu vermeiden.

In weiterer vorteilhafter Ausgestaltung kann vorgesehen sein, daß die Gradientenauswertung des Temperaturverlaufs für eine Übertemperaturerkennung und/oder eine Wasserausfallserkennung derart genutzt wird, daß im Falle der Erkennung des einen und/oder anderen Ereignisses dem Regler eine Regelkonstante derart vorgegeben wird, daß das Stellglied 17 in eine den Wasserbezug unterbrechende Endstellung verfahren wird. Gemäß einer vorteilhaften Ausgestaltung wird also das erfindungsgemäße Verfahren zur Gradientenauswertung des Temperaturverlaufs für eine Übertemperatur- und/oder zur Kaltwasserausfallerkennung genutzt. Die Übertemperaturerkennung ist ein wichtiges Sicherheitsmerkmal im Haushaltsbereich, um ein Verbrühen des Benutzers zu verhindern. Dem gleichen Ziel dient es, rechtzeitig zu erkennen, ob eventuell die Kaltwasserzuführung unterbrochen ist. Ein Kaltwasserausfall führt ansonsten im ersten Moment ebenfalls zu einem überhitzten Wasserauslauf der aus Sicherheitsgründen unbedingt zu vermeiden ist.

In weiterer vorteilhafter Ausgestaltung kann vorgesehen sein, daß die Reglereinheit 6 selbst derart selbstparametrierend ausgelegt ist, daß in einem ersten Schritt ein Mininmal- und/oder maximalpunkt des Regelbereichs, Vorzugsweise der Kaltwasserzufuhr, angefahren wird und die dieser Stellgliedstellung entsprechende Sollwertvorgabe in einem Datenspeicher 33 abgelegt wird und im weiteren Betrieb die den jeweiligen Temperatureinstellungen entsprechenden Stellgliedstellungen ständig in diesem Datenspeicher 33 in einem Histogramm gespeichert und dieses hierdurch ständig aktualisiert werden.

Gemäß einem weiteren Leistungsmerkmal des erfindungsgemäßen Verfahrens ist also die Reglereinheit 6 selbstparametrierend ausgelegt. Bei der ersten Inbetriebnahme wird wenigstens eine Grenze des Regelbereichs angefahren und im weiteren Betrieb anhand erfolgreich geregelter Temperaturen ein Histogramm, der den jeweiligen Temperaturvorgaben entsprechenden Stellgliedstellungen angelegt. Das System ist demnach selbsteinstellend und vor allem selbstlernend, da die Histogramme im Betrieb ständig bearbeitet und aktualisiert werden und überdies mit zunehmender Betriebsdauer der Anlage immer genauer werden.

Dabei kann zweckmäßiger Weise vorgesehen sein, daß im Datenspeicher 33 der Reglereinheit 6 unterschiedliche Temperaturbereiche der Feinregelung angelegt sind. Mithin kann das der Reglereinheit 6 zugeordnete Speicherelement mit Vorteil dazu genutzt werden, daß der bereits erwähnte Feinregelbereich durchaus unterschiedlich definiert sein kann. So kann zwischen einzelnen Benutzerprofilen unterschieden werden. So ist beispielsweise der für Kleinkinder einzusetzende Temperaturbereich ein anderer als für erwachsene Personen.

Dies kann durch die Ablage entsprechender Benutzerprofile in dem genannten Speicherelement berücksichtigt werden.

In abermals vorteilhafter Ausgestaltung kann die Reglereinheit 6 mit einer Betriebsdatenerfassung verbunden sein. Hierdurch können weitere Komfortmerkmale wie ein Betriebsstundenzähler oder die Vorgabe von Wassernutzungszeiten im Hotel- oder Gaststättenbereich realisiert werden.

Es kann ferner vorgesehen sein, daß im Programmspeicher 32 der Reglereinheit 6 ein Programmm-Modul zur thermischen Desinfektion derart abgelegt ist, daß aufgrund der Programmvorgabe ein extrem hoher Temperatursollwert für einen definierten Zeitraum dem Regler vorgegeben wird.

Mithin können auch feste Steuerprogramme programmiert und abgerufen werden, wie beispielsweise ein Programm zur thermischen Desinfektion, bei dem ein extrem hoher Temperaturbereich für einen definierten Zeitraum angefahren wird. Ein derartiges Programm ist beispielsweise zur thermischen Desinfektion bei der Legionellenbekämpfung ausgesprochen wertvoll.

## Patentansprüche

1. Elektronischer Mischwasserbereiter (1) mit einer Bedieneinheit (3) zur Soll-Wert-Vorgabe und einer elektronischen Reglereinheit (6), die in Abhängigkeit von einem Temperatursensor (13) zur Ist-Wert-Erfassung über ein mechanisches Stellglied (17) auf eine Regelstrecke zur Mischwasserbereitung einwirkt,
**dadurch gekennzeichnet, daß**
die elektronische Reglereinheit (6) und das mechanische Stellglied (17) in einer einzigen, zur Unterputzmontage geeigneten, kompakten Geräteeinheit (2) angeordnet ist, wobei das Stellglied (17) auf einen drehbar gelagerten Stellkörper (21) einwirkt, so daß ein seiner Drehstellung entsprechendes Wassergemisch des durch einen Warmwasserzulauf (10) und einen Kaltwasserzulauf (11) zuführbaren Warm- und Kaltwassers innerhalb eines Mischerkörpers (8) erzeugbar ist.

2. Elektronischer Mischwasserbereiter nach Anspruch 1, **dadurch gekennzeichnet, daß** die Regelstrecke zur Ist-Wert-Erfassung ausschließlich mit einem Temperatursensor (13) in Datenverbindung steht.

3. Elektronischer Mischwasserbereiter nach Anspruch 1 oder 2, **dadurch gekennzeichnet, daß** als Stellglied der Regelstrecke ein Schrittmotor (17) vorgesehen ist, der über ein Getriebe (20) mit einem Zwei-Wege-Mischerventil (21) in einem Mischerkörper (8) in Wirkverbindung steht, wobei der Mischerkörper (8) je einen Kaltund Warmwasseranschluß (10 und 11) aufweist.

4. Elektronischer Mischwasserbereiter, nach einem der vorhergehenden Ansprüche, **dadurch gekennzeichnet, daß** die Reglereinheit (6) einen Mikrocontroller (30) mit eigener Rechnereinheit (31) umfaßt, sowie einen beschreibbaren Daten- und Programmspeicher (32, 33), wobei die Reglereinheit (6) mit einem Schnittstellenmodul (5) zum Anschluß von Diagnose- und/oder Programmiergeräten verbunden ist.

5. Elektronischer Mischwasserbereiter nach einem der vorhergehenden Ansprüche, **dadurch gekennzeichnet, daß** die Bedieneinheit (3) eine Anzeige (26), vorzugsweise ein Display, und eine Eingabeeinheit, vorzugsweise ein Tastenfeld (23, 24, 25) umfaßt.

6. Elektronischer Mischwasserbereiter nach Anspruch 5, **dadurch gekennzeichnet, daß** die Anzeige (26) wenigstens drei alphanumerische Zeichen, vorzugsweise jeweils mit einer Sieben-Segment-Anzeige, sowie daß die Eingabeeinheit eine Menütaste (23) und wenigstens zwei Auswahltasten (24 und 25) aufweist.

7. Elektronischer Mischwasserbereiter nach einem der vorhergehenden Ansprüche, **dadurch gekennzeichnet, daß** ein oder mehrere Wasserbezugsgeräte an den elektronischen Mischwasserbereiter (1) anschließbar sind und einzelne Wasserbezugsgeräte über die Bedieneinheit (3) auswähl- und ansteuerbar sind.

## Claims

1. Electronic water mixer (1) with a control unit (3) for target value presetting and an electronic regulator unit (6), which acts by way of a mechanical setting element (17) on a regulating path to the water mixing in dependence on a temperature sensor (13) for actual value detection, **characterised in that** the electronic regulator unit (6) and the mechanical setting element (17) are arranged in a single compact apparatus unit (2) suitable for mounting under plaster, wherein the setting element (17) acts on a rotatably mounted setting body (21) so that a water mixture, which corresponds with the rotational setting thereof, of the hot water and cold water able to be fed through a hot water feed (10) and a cold water feed (11) can be produced within a mixer body (8).

2. Electronic water mixer according to claim 1, **characterised in that** the regulating path for the actual value detection is disposed in data connection exclusively with a temperature sensor (13).

3. Electronic water mixer according to claim 1 or 2, **characterised in that** a stepping motor (17) is provided as setting element of the regulating path and is disposed in operative connection with a two-way mixer valve (21) in a mixer body (8) by way of a transmission (20), wherein the mixer body (8) has a respective cold water connection (11) and hot water connection (10).

4. Electronic water mixer according to one of the preceding claims, **characterised in that** the regulator unit (6) comprises a microcontroller (30) with an own computer unit (31), as well as a writable data memory (32) and program memory (33), wherein the regulator unit (6) is connected with an interface module (5) for connection of diagnostic and/or programming apparatus.

5. Electronic water mixer according to one of the preceding claims, **characterised in that** the control unit (3) comprises an indication (26), preferably a display, and an input unit, preferably a button panel (23, 24, 25).

6. Electronic water mixer according to claim 5, **characterised in that** the indication (26) has at least three alpha-numeric characters, preferably each with a seven-segment indication, and that the input unit comprises a menu button (23) and at least two selector buttons (24 and 25).

7. Electronic water mixer according to one of the preceding claims, **characterised in that** one or more water draw apparatus are connectible with the electronic water mixer (1) and individual water draw apparatus are selectable and controllable by way of a control unit (3).

## Revendications

1. Dispositif électronique de préparation d'eau mixte (1) avec une unité de commande (3) pour la spécification de valeur de consigne et une unité de réglage (6) électronique qui agit en fonction d'un capteur de température (13) pour l'enregistrement de valeur réelle par l'intermédiaire d'un actionneur (17) mécanique sur un système réglé pour la préparation d'eau mixte,
**caractérisé en ce que**
l'unité de réglage (6) électronique et l'actionneur (17) mécanique sont disposés dans une seule unité d'appareil (2) compacte et appropriée pour le montage encastré, l'actionneur de réglage (17) agissant sur un corps de réglage (21) logé de façon pivotante, de sorte qu'un mélange d'eau correspondant à sa position de rotation de l'eau chaude et de l'eau froide pouvant arriver par une arrivée d'eau chaude (10) et une arrivée d'eau froide (11) peut être généré à l'intérieur d'un corps mélangeur (8).

2. Dispositif électronique de préparation d'eau mixte selon la revendication 1, **caractérisé en ce que** le système réglé pour l'enregistrement de valeur réelle est en liaison de données exclusivement avec un capteur de température (13).

3. Dispositif électronique de préparation d'eau mixte selon la revendication 1 ou 2, **caractérisé en ce qu'**il est prévu comme actionneur du système réglé un moteur pas à pas (17), qui est en liaison active au moyen d'un engrenage (20) avec une vanne mélangeuse à deux voies (21) dans un corps mélangeur (8), le corps mélangeur (8) présentant un branchement d'eau froide et un branchement d'eau chaude (10 et 11).

4. Dispositif électronique de préparation d'eau mixte, selon l'une quelconque des revendications précédentes, **caractérisé en ce que** l'unité de réglage (6) comprend un microcontrôleur (30) avec une unité de calcul (31) propre, ainsi qu'une mémoire de données et de programmes (32, 33) sur laquelle on peut écrire, l'unité de réglage (6) étant reliée à un module d'interface (5) pour le raccordement d'appareils de diagnostic et/ou de programmation.

5. Dispositif électronique de préparation d'eau mixte selon l'une quelconque des revendications précédentes, **caractérisé en ce que** l'unité de commande (3) comprend un affichage (26), de préférence une console de visualisation, et une unité d'entrée, de préférence un clavier à touches (23, 24, 25).

6. Dispositif électronique de préparation d'eau mixte selon la revendication 5, **caractérisé en ce que** l'affichage (26) présente au moins trois caractères alphanumériques, de préférence chacun avec un affichage à 7 segments, **en ce que** l'unité d'entrée présente une touche de menu (23) et au moins deux touches de sélection (24 et 25).

7. Dispositif électronique de préparation d'eau mixte selon l'une quelconque des revendications précédentes, **caractérisé en ce qu'**un ou plusieurs appareils d'alimentation en eau peut (peuvent) être raccordé(s) au dispositif électronique de préparation d'eau mixte (1) et que certains appareils d'alimentation en eau peuvent être sélectionnés et commandés au moyen de l'unité de commande (3).
